# EUROPÄISCHE PATENTSCHRIFT

(11) **EP 1 221 190 B1**
(45) Veröffentlichungstag und Bekanntmachung des Hinweises auf die Patenterteilung: **02.03.2005**
(21) Anmeldenummer: 99952545.4
(22) Anmeldetag: 08.10.1999
(51) Int. Cl.: H02J 9/06

(54) **VORRICHTUNG ZUR UNTERBRECHUNGSFREIEN STROMVERSORGUNG MIT EINER ELEKTRISCHEN MASCHINE UND EINEM SCHWUNGRAD**
DEVICE FOR PROVIDING AN UNINTERRUPTED SUPPLY OF POWER COMPRISING AN ELECTRICAL MACHINE AND A FLYWHEEL
DISPOSITIF D'ALIMENTATION ININTERROMPUE EN COURANT AVEC UNE MACHINE ELECTRIQUE ET UN VOLANT

(43) Veröffentlichungstag der Anmeldung: 10.07.2002
(73) Patentinhaber: RWE Piller GmbH, 37520 Osterode am Harz (DE)
(72) Erfinder: GOSEBRUCH, Harald, D-27283 Verden (DE); UEFFING, Norbert, D-37520 Osterode (DE)
(74) Vertreter: Patentanwälte Rehberg + Hüppe
(86) Internationale Anmeldenummer: PCT/EP1999/007577
(87) Internationale Veröffentlichungsnummer: WO 2001/028065

(56) Entgegenhaltungen:
- DE-A- 3 002 945
- DE-A- 3 129 928
- DE-A- 4 442 948
- DE-C- 19 715 175
- US-A- 4 278 928
- US-A- 4 525 661

## Beschreibung

Die Erfindung bezieht sich auf eine Vorrichtung zur unterbrechungsfreien Stromversorgung mit einer einen Rotor aufweisenden, als Motor oder als Generator betreibbaren elektrischen Maschine, die ohne Zwischenschaltung eines eine variable Eingangsfrequenz aufweisenden Umrichters mit einer mit Wechselstrom zu versorgenden Last verbunden ist, mit einem Schwungrad, das über eine variable Übersetzung aufweisende Kopplungsmittel an den Motor angekoppelt ist, und mit Steuermitteln für die Übersetzung der Kopplungsmittel, die die Drehzahl der mit der in dem Schwungrad gespeicherten kinetischen Energie als Generator betriebenen elektrischen Maschine zumindest über einen Drehzahlbereich des Schwungrads konstant halten,
wobei die Kopplungsmittel ein Differenzgetriebe mit drei Eingangs-/Ausgangswellen aufweisen und die Steuermittel eine als Motor betreibbare elektrische Hilfsmaschine und eine regelbare Bremse aufweisen, die an der dritten Eingangs-/Ausgangswelle des Differenzgetriebes angreifen.

vorrichtungen zur unterbrechungsfreien Stromversorgung, die allgemein und auch hier meistens als USV-Anlagen bezeichnet werden, dienen dazu, insbesondere kurzzeitige Ausfälle eines Stromnetzes, welches normalerweise zur Versorgung einer Last mit Wechselstrom verwendet wird, zu überbrücken. Dabei ist es ein bekanntes Konzept, mit Hilfe des Stromnetzes zusätzlich zu der Last eine elektrische Maschine als Motor zu betreiben, die ein Schwungrad auf eine bestimmte Drehzahl bringt und kontinuierlich auf dieser Drehzahl hält. Wenn das Netz ausfällt, kann die in dem Schwungrad gespeicherte kinetische Energie genutzt werden, um die elektrische Maschine als Generator zu betreiben, um die Last mit Wechselstrom zu versorgen. Dabei nimmt die kinetische Energie des Schwungrads und damit seine Drehzahl naturgemäß ab. Bei starrer Ankopplung des Schwungrads an den Generator bedeutet dies, daß ein Umrichter mit variabler Eingangsfrequenz zwischen dem Generator und der Last vorgesehen sein muß, um die Last mit Wechselstrom konstanter Frequenz zu versorgen. Ein solcher Umrichter ist ebenso wie ein Wechselrichter, der einer Gleichstrommaschine als elektrische Maschine nachgeschaltet werden müßte, im besonders interessierenden Mittelspannungsbereich der Größenordnung 10.000 Volt eine komplizierte Einrichtung, wenn er für größere Leistungen, d. h. für größere Ströme ausgelegt werden soll. Aber auch bei Auslegung für große Leistungen ist er gegenüber Kurzschlußströmen extrem empfindlich.

Es ist daher bekannt, eine Vorrichtung zur unterbrechungsfreien Stromversorgung nach der eingangs beschriebenen Art auszubilden, bei der das Schwungrad nicht starr an den Rotor der elektrischen Maschine angekoppelt ist, sondern über eine variable Übersetzung aufweisende Kopplungsmittel. Bei einer konkreten bekannten unterbrechungsfreien Stromversorgung der eingangs beschriebenen Art der Firma HOLEC/HITEC weisen die Kopplungsmittel eine elektromagnetische Kupplung zwischen der elektrischen Maschine und dem Schwungrad auf. Die elektromagnetische Kupplung erlaubt es, daß sich das Schwungrad abbremst, ohne daß sich die Drehzahl der als Generator betriebenen elektrischen Maschine verringert. Bei einfachem Aufbau der elektromagnetischen Kupplung ist dies solange möglich, wie die Drehzahl des Schwungrads größer ist als die gewünschte konstante Drehzahl des Generators. Dabei ist in diesem Fall erforderlich, daß das Schwungrad über einen anderen Drehmomentübertragungsweg von der als Motor betriebenen elektrischen Maschine auf eine größere Drehzahl gebracht wird als die Drehzahl der elektrischen Maschine. Wenn die elektromagnetische Kupplung auch eine Aufwärtsübersetzung der jeweils antreibenden Eingangsdrehzahl ermöglichen soll, ist der Aufbau der elektromagnetischen Kupplung und der Aufbau der hierfür notwendigen Steuermittel besonders aufwendig.

Aus dem Stand der Technik der USV-Anlagen ist es auch bekannt, für längere Ausfälle eines Netzes eine Brennkraftmaschine vorzusehen, um die elektrische Maschine als Generator anzutreiben, wenn ein längerer Stromausfall zu überbrücken ist. Der Rotor der elektrischen Maschine wird mit dem Generator über eine Freilaufkupplung oder eine schaltbare Kupplung verbunden. Wenn der elektrischen Maschine kein Umrichter mit variabler Eingangsfrequenz nachgeschaltet ist, muß die Drehzahl der Brennkraftmaschine bereits die Drehzahl der elektrischen Maschine erreicht haben, bevor an die elektrische Maschine angekoppelt werden darf; anschließend muß ihre Drehzahl konstant gehalten werden.

Aus der US-4 278 928 ist eine elektrische Generatoranordnung bekannt, bei der der Eingangswelle eines elektrischen Generators ein Differenzgetriebe in Form eines Planetengetriebes vorgeschaltet ist. Dabei ist die Eingangswelle des Generators mit dem Sonnenrad des Planetengetriebes verbunden. Der Läufer der Planeten des Planetengetriebes ist mit der Eingangswelle der gesamten elektrischen Generatoranordnung verbunden. Der Zahnkranz des Planetengetriebes kann durch einen hydraulischen Antrieb mit verschiedener Drehzahl angetrieben werden, um das Übersetzungsverhältnis des Planetengetriebes so zu variieren, daß die Drehzahl des Generators auch bei schwankender Drehzahl an der Eingangswelle der gesamten elektrischen Generatoranordnung konstant gehalten wird. Das Hydraulikmedium für den hydraulischen Antrieb wird von Pumpen bereitgestellt, die von der sich auf konstanter Drehzahl befindlichen Eingangswelle des Generators oder einem anderen Teil des Generators angetrieben wird.

Aus der US 4 525 661 ist eine Vorrichtung für eine unterbrechungsfreie Stromversorgung mit einer als Motor und Generator arbeitenden elektrischen Maschine bekannt. Diese Maschine ist drehfest mit einem Laufer eines Planetengetriebes verbunden, dessen Sonnenrad mit einer ersten elektrischen Hilfsmaschine in Verbindung steht und dessen Zahnkranz mit einer zweiten elektrischen Hilfsmaschine und einem Schwungrad in Antriebsverbindung steht. Das Sonnenrad ist darüber hinaus über eine Bremse mit einem Gehäuse und (bei gelöster Bremse) über eine Kupplung mit einer Brennkraftmaschine verbindbar. In einem ersten Betriebszustand (Stand-by-Betrieb) wird die Vorrichtung von der elektrischen Maschine angetrieben, wobei das Sonnenrad und die erste elektrische Hilfsmaschine über die Bremse blockiert sind, während das Schwungrad und die zweite etektrische Hilfsmaschine in unbelastetem zustand rotieren. In einem zweiten Betriebszustand (Einbruch der Energieversorgung) wird die elektrische Maschine als Generator betrieben, wobei unter Verwendung des Stromes, der durch die zweite elektrische Hilfsmaschine gewonnen worden ist, die erste elektrische Hilfsmaschine gestarted wird. Das Schwungrad, verlangsamt sich und überträgt Energie. Durch eine Beschleunigung der ersten elektrischen Hilfsmaschine kann der Generator auf einer konstanten Drehzahl gehalten werden.

Der Erfindung liegt die Aufgabe zugrunde, eine unterbrechungsfreie Stromversorgung der eingangs beschriebenen Art aufzuzeigen, die einen besonders einfachen Aufbau aufweist.

Erfindungsgemäß wird diese Aufgabe dadurch gelöst, daß die Steuermittel so ausgebildet sind, daß beim Betreiben der elektrischen Maschine als Motor zum Erreichen einer gewünschten Enddrehzahl des Schwungrads die Hilfsmaschine als ebenfalls Motor betrieben wird.

Bei der neuen USV-Anlage wird beim Betreiben der elektrischen Maschine als Motor mit Hilfe der Hilfsmaschine zusätztiche Kinetische Energie in dem Schwungrad gespeichert. Beim Betreiben der elektrischen Maschine als Generator kann mit Hilfe der regelbaren Bremse die Drehzahl der elektrischen Maschine zumindest so lange konstant gehalten werden, bis die Drehzahl der dritten Eingangs-/Ausgangswelle des Planetengetriebes auf null abgesunken ist.

Typischerweise ist die Leistungsfähigkeit der Hilfsmaschine bei der neuen USV-Anlage deutlich kleiner als die Leistungsfähigkeit der elektrischen Maschine.

Das Differenzgetriebe der neuen USV-Anlage kann beispielsweise ein mechanisches Differential oder ein Planetengetriebe sein.

Im Vergleich zur US 4 525 661 ist die erfindungsgemäße Vorrichtung kompakt aufgebaut, wobei auch mit lediglich einer elektrischen Hilfsmaschine die volle Funktion gewährleistet werden kann. Zusätzlich können infolge der Überlagerung der Drehbewegungen der Hilfsmaschine und der elektrischen Maschine höhere Drehzahlen des Schwungrades erzielt werden, wodurch eine größere Energie im Schwungrad gespeichert werden kann. Alternativ oder zusätzlich kann durch das Zusammenspiel der elektrischen Maschine und der Hilfsmaschine der Drehzahlbereich dieser Maschinen geeignet angepasst werden, wodurch beispielsweise andere elektrische Aggregate einsetzbar werden oder die Betriebsbereiche der Aggregate optimiert werden können.

In einer bevorzugten Ausführungsform der neuen USV-Anlage ist das Differenzgetriebe als Planetengetriebe mit einem Sonnenrad, einem Planetenräder tragenden Läufer und einem Zahnkranz ausgebildet, wobei das Sonnenrad mit der zu dem Schwungrad und der Läufer mit der zu der elektrischen Maschine führenden Eingangs-/Ausgangswelle drehfest verbunden ist und wobei der Zahnkranz mit der zu der Hilfsmaschine führenden Eingangs-/Ausgangswelle festgetrieblich gekoppelt ist. Das Planetengetriebe ist bei dieser Anschlußweise für eine Übersetzung der Drehzahl des Motors in eine höhere Übersetzung der Drehzahl des Schwungrads vorgesehen, um möglichst viel kinetische Energie in einem Schwungrad mit gegebenem Trägheitsmoment zu speichern. Mit der elektrischen Hilfsmaschine wird diese Übersetzung durch gegensinnigen Antrieb des Zahnkranzes noch gesteigert. Bei der Ausnutzung der kinetischen Energie des Schwungrads wird die zur Steigerung der Übersetzung des Planetengetriebes mit der Hilfsmaschine aufgebrachte elektrische Energie zurückgewonnen, soweit sie nicht zu einem geringen Teil mit der regelbaren Bremse vernichtet, daß heißt in Wärme umgewandelt wird.

Bei der regelbaren Bremse kann es sich um eine zusätzliche mechanische Bremse handeln. Es kann aber auch die elektrische Hilfsmaschine so ausgebildet sein, daß sie als elektromagnetische Bremse betreibbar ist. Der dabei in der Hilfsmaschine erzeugte Strom kann vernichtet oder seinerseits als Notstrom genutzt werden.

Die elektrische Hilfsmaschine ist im einfachsten Fall eine Asynchronmaschine, die beim Betreiben als Motor von den Steuermitteln direkt an das Stromnetz angehängt wird. Eine Asynchronmaschine als Hilfsmaschine ist mit einer zusätzlichen regelbaren Bremse zu kombinieren. Wenn mit dieser Bremse die Drehzahl der dritten Eingangs-/Ausgangswelle des Differenzgetriebes bis auf null abgebremst worden ist, wobei die Asynchronmaschine typischerweise ausgeschaltet gewesen ist, können die Steuermittel die Asynchronmaschine mit gegenüber dem Netzbetrieb umgekehrter Polung an die als Generator betriebene elektrische Maschine anhängen, um die dritte Eingangs-/Ausgangswelle des Differenzgetriebes nun in umgekehrter Drehrichtung zu beschleunigen. Die genaue Drehzahlregelung für die Konstanthaltung der Drehzahl der elektrischen Maschine erfolgt dabei wiederum mit Hilfe der mechanischen Bremse.

Wenn die elektrische Hilfsmaschine eine Synchronmaschine ist, die über einen Umrichter mit der elektrischen Maschine und der Last verbindbar ist, kann die Hilfsmaschine als die Bremse oder zumindest zur Bereitstellung eines Teils der Bremsleistung betrieben werden. Zudem kann der in der Hilfsmaschine beim Bremsen erzeugte Strom der Last über den Umrichter zur verfügung gestellt werden, so daß die elektrische Energie nicht verloren geht. Weiterhin eröffnet die Verwendung der Synchronmaschine mit dem Umrichter die Ausnutzung der kinetischen Energie des Schwungrads bis dessen Drehzahl theoretisch bis auf null abgesunken ist, d.h. die kinetische Energie des Schwungrads kann voll ausgenutzt werden. Im niedrigen Drehzahlbereich des Schwungrads ist zur Aufrechterhaltung der Drehzahl des Rotors der elektrischen Maschine wieder ein Betrieb der elektrischen Hilfsmaschine als Motor in in Bezug auf den Netzbetrieb entgegengesetzter umlaufrichtung erforderlich. Die hierfür benötigte Energie stellt die elektrische Maschine bereit, die ihrerseits von der elektrischen Hilfsmaschine als Motor angetrieben wird, so daß bis auf die verlustleistungen die Energiebilanz durch die elektrische Hilfsmaschine ausgeglichen ist. Über den Umrichter zwischen der elektrischen Hilfsmaschine und der elektrischen Maschine bzw. der Last fließt nur ein Teil des Gesamtstroms. Der Umrichter ist daher von deutlich einfacherem Aufbau als für die elektrische Maschine, wenn diese mit variabler Drehzahl betrieben würde.

Die elektrische Hilfsmaschine kann auch eine Gleichstrommaschine sein, die über einen Wechselrichter mit der elektrischen Maschine und der Last verbindbar ist. Dabei sind dieselben Betriebsarten möglich wie bei einer Asynchronmaschine mit Umrichter.

Die elektrische Maschine der neuen USV-Anlage ist in aller Regel eine Synchronmaschine, die trotz großer Leistungsfähigkeit einen einfachen Aufbau aufweist und zu günstigen Kosten verfügbar ist.

Ergänzend zu dem Schwungrad, das mit seiner kinetischen Energie zur Überbrückung kurzzeitiger Stromausfälle vorgesehen ist, kann der Rotor durch eine Brennkraftmaschine antreibbar sein, um längerfristige Stromausfälle zu überbrücken. Dabei kann zwischen dem Rotor und der Brennkraftmaschine eine von den Steuermitteln schaltbare Kupplung vorgesehen sein.

Besonders bevorzugt ist es, wenn zusätzlich aber auch alternativ zu der schaltbaren Kupplung zwischen dem Rotor und der Brennkraftmaschine ein Differenzgetriebe vorgesehen ist, dessen dritte Eingangs-/Ausgangswelle an eine weitere elektrische Hilfsmaschine der Steuermittel angekoppelt ist. Die weitere Hilfsmaschine dient zum Ausgleich von Drehzahlunterschieden zwischen dem Rotor und der Brennkraftmaschine, insbesondere wenn die Brennkraftmaschine ihre mit der Drehzahl des Rotors übereinstimmende oder zu dieser in einem festen Verhältnis stehende Enddrehzahl noch nicht erreicht hat.

In einer weiterentwickelten Ausführungsform kann bei der Brennkraftmaschine aufgrund des zwischen der Brennkraftmaschine und dem Rotor vorgesehenen Differenzgetriebes auf einen Anlassermotor verzichtet werden. Die zum Anlassen der Brennkraftmaschine notwendige Energie wird dann von der elektrischen Maschine zusammen mit der weiteren Hilfsmaschine und damit letztlich von dem Schwungrad bereitgestellt.

Es ist aber auch möglich, zwischen dem Rotor und der Brennkraftmaschine eine Freilaufkupplung vorzusehen. In diesem Fall ist ein separater Anlassermotor für die Brennkraftmaschine erforderlich.

Das Hochfahren der elektrischen Maschine in einen Drehzahlbereich, in dem sie als Synchronmotor betreibbar ist, kann bei der neuen USV-Anlage ohne zusätzlichen Motor mit Hilfe der elektrischen Hilfsmaschine erfolgen, wobei das Schwungrad festgehalten werden kann.

Die Erfindung wird im folgenden anhand von Ausführungsbeispielen näher erläutert und beschrieben. Dabei zeigt:
- Figur 1: die prinzipielle Anordnung der Bauteile der neuen Vorrichtung zur unterbrechungsfreien Stromversorgung in einer ersten Ausführungsform,
- Figur 2: einen Einlinien-Stromlaufplan zu der neuen Vorrichtung zur unterbrechungsfreien Stromversorgung in der Ausführungsform gemäß Figur 1,
- Figur 3: die prinzipielle Anordnung der Bauteile einer zweiten Ausführungsform der neuen Vorrichtung zur unterbrechungsfreien Stromversorgung und
- Figur 4: die prinzipielle Anordnung der Bauteile einer dritten Ausführungsform der neuen Vorrichtung zur unterbrechungsfreien Stromversorgung.

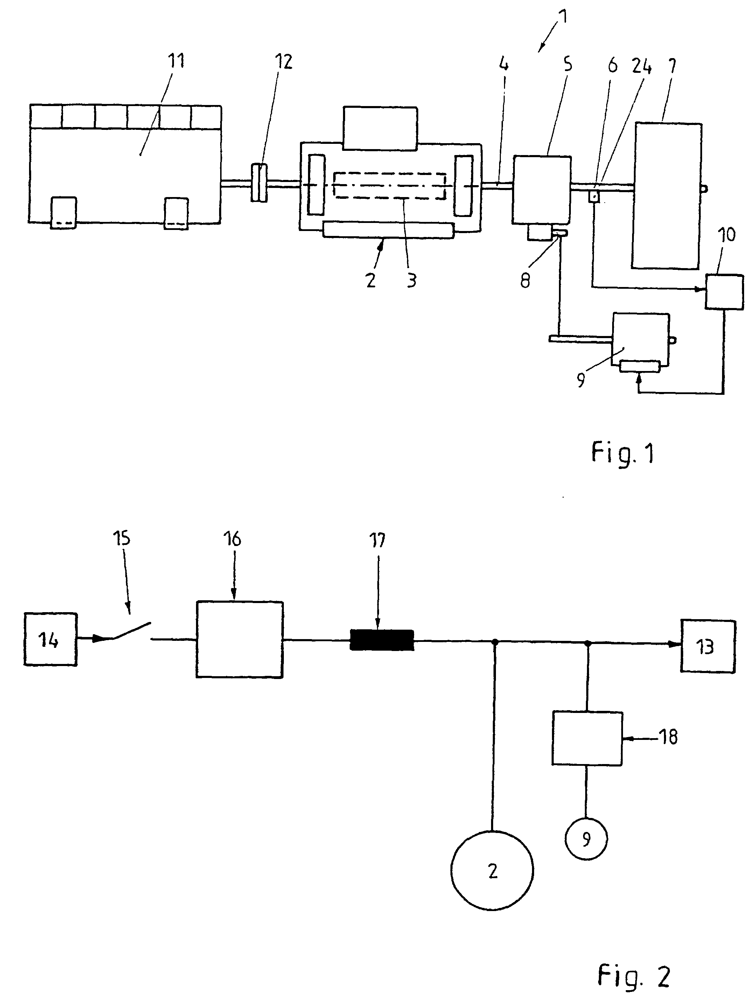

Die in Figur 1 dargestellte USV-Anlage 1 weist eine elektrische Maschine 2 in Form einer Synchronmaschine auf, die als Motor oder als Generator betreibbar ist. Ein Rotor 3 der elektrischen Maschine 1 ist mit einer Eingang-/Ausgangswelle 4 eines hier als Planetengetriebe ausgebildeten Differenzgetriebes 5 drehfest verbunden. Eine weitere Eingang-/Ausgangswelle 6 des Differenzgetriebes 5 ist mit einem Schwungrad 7 drehfest verbunden. Eine dritte Eingangs-/Ausgangswelle 8 des Differenzgetriebes 5 ist festgetrieblich mit dem Rotor einer elektrischen Hilfsmaschine 9 gekoppelt. Dabei ist die Eingangs-/Ausgangswelle 6 mit dem Sonnenrad, die Eingangs-/Ausgangswelle 4 mit dem Läufer der Planetenräder und die Eingangs-/Ausgangswelle 8 mit dem Zahnkranz des das Differenzgetriebe 5 bildenden Planetengetriebes verbunden. Bei dieser Anordnung ist durch eine Steuereinrichtung 10, die über einen Sensor 24 die Drehzahl der Eingangs-/Ausgangswelle 6 abgreift, die hier als elektrische Synchronmaschine ausgebildete Hilfsmaschine 9 so ansteuerbar, daß die Drehzahl der Eingangs-/Ausgangswelle 4 konstant gehalten wird, auch wenn die Drehzahl des Schwungrads 7 beim Betrieb der elektrischen Maschine 2 als Generator abfällt. Die Steuereinrichtung 10 dient auch dazu, daß Schwungrad 7 durch entsprechende Ansteuerung der elektrischen Hilfsmaschine 9 auf eine gegenüber dem Rotor 3 der elektrischen Maschine 2 erhöhte Drehzahl zu bringen, wenn die elektrische Maschine 2 als Motor betrieben wird, um möglichst viel kinetische Energie in dem Schwungrad 7 zu speichern, die zum Überbrücken von Stromausfällen eines Stromnetzes, dem die USV-Anlage 1 parallel geschaltet ist, zur verfügung zu steht. Für längere Unterbrechungen der externen Stromversorgung ist eine Brennkraftmaschine 11 über eine Freilaufkupplung 12 an den Rotor 3 der elektrischen Maschine 2 ankoppelbar, wobei die Freilaufkupplung 12 eine höhere aber keine niedrigere Drehzahl des Rotors 3 gegenüber der Brennkraftmaschine 1 erlaubt.

Der Einlinien-Stromlaufplan gemäß Figur 2 zeigt die Versorgung einer Last 13 mit Strom entweder durch eine externe Stromquelle 14, bei der es sich typischerweise um ein öffentliches Stromnetz handelt, oder durch die elektrische Maschine 2. Dabei sind zwischen der externen Stromquelle 14 und der Last 13 ein erster Schalter 15 ein Thyristorschalter 16 und eine Drossel 17 angeordnet. Die Drossel 17 kann auch in bekannter Weise T-förmig verschaltet sein, wobei die Drossel 17 im wünschenswerten Umfang auch auf den von der elektrischen Maschine 2 kommenden Strom einwirkt. Die elektrische Maschine 2 ist zwischen der Drossel 17 und der Last 13 angeschlossen. Dabei ist kein Umrichter oder Wechselrichter zwischengeschaltet. Ein Umrichter 18 findet sich jedoch vor der elektrischen Hilfsmaschine 9 und der Last.

Im folgenden werden verschiedene Betriebszustände der USV-Anlage 1 gemäß den Figuren 1 und 2 geschildert, wobei von einem Planetengetriebe i13=-2 ausgegangen ist und die nachstehende Tabelle eine Übersicht über die Betriebszustände gibt:

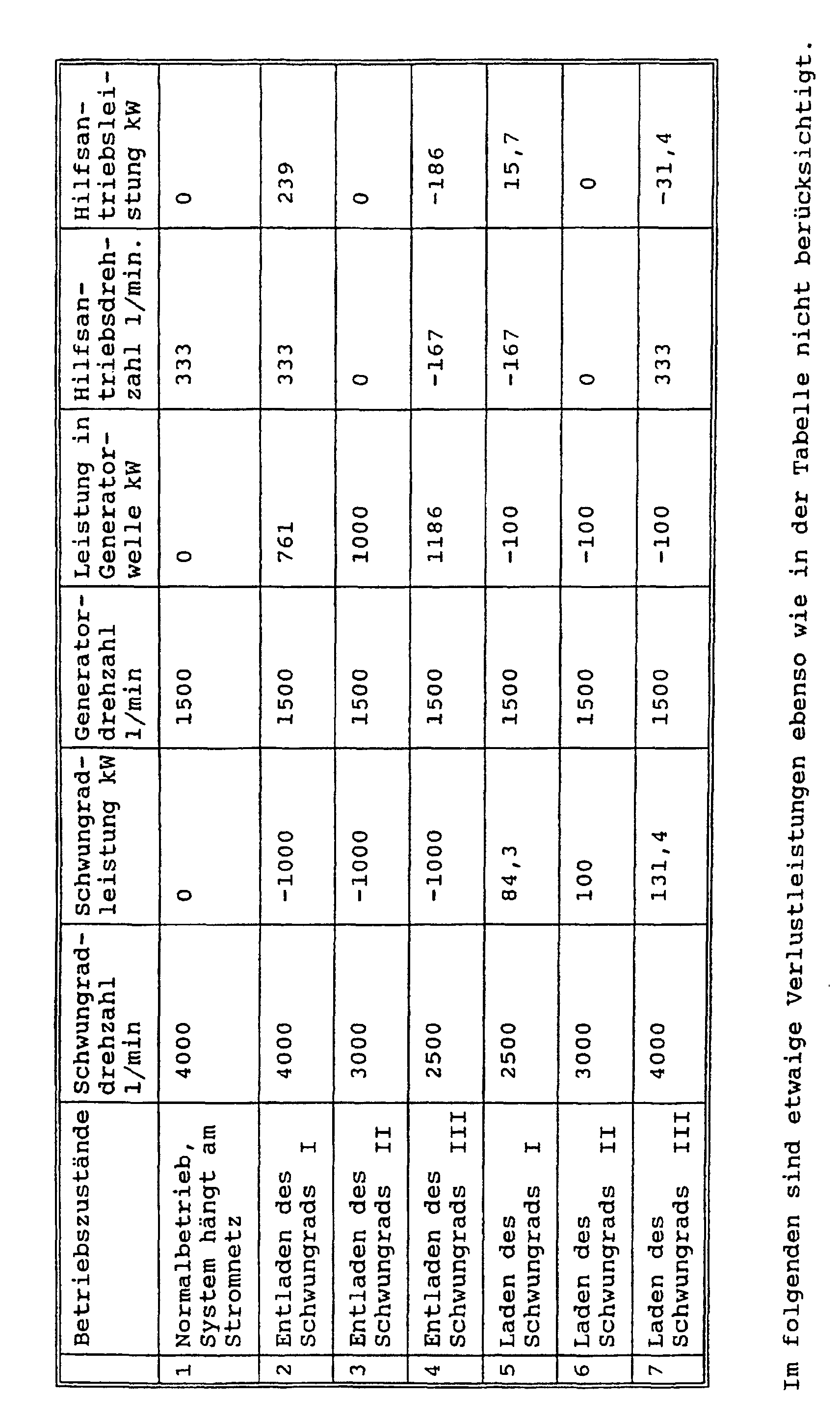

### 1. Normalbetrieb, System hängt am Stromnetz

Beim Normalbetrieb der Last 13 über die externe Stromquelle 14 sind in dem Einlinien-Stromlaufplan gemäß Figur 2 der Schalter 15 und der Thyristorschalter 16 geschlossen. Die Last 13 hängt an der Drossel 17 ebenso wie die als Motor betriebene elektrische Maschine 2. Die Leistung, die von der Last 13 verbraucht wird, wird vollständig der externen Stromquelle 14 entnommen, ebenso die verlustleistung der elektrischen Maschine 2 und der Hilfsmaschine 9, mit der eine konstante Drehzahl in den Zahnkranz des Planetengetriebes eingeleitet wird, um ein konstantes Übersetzungsverhältnis zwischen den Eingangs-/Ausgangswellen 4 und 6 des Planetengetriebes bereitzustellen.

### 2. Entladen des Schwungrads I

Beim Ausfall der externen Stromquelle 14 wird die im Normalbetrieb gemäß 1. in dem Schwungrad 7 gespeicherte Energie zurückgewonnen. Dabei sind der Schalter 15 und der Thyristorschalter 16 geöffnet. In dem in der obigen Tabelle wiedergegebenen Beispiel wird angenommen, daß die Last 13 einen Leistungsbedarf von 1.000 kW hat. Diese Leistung wird zunächst zum Teil von der elektrischen Maschine 2 als auch von der elektrischen Hilfsmaschine 9 bereitgestellt, die aufgrund der Leistungs- und Momentenverzweigung im Planetengetriebe von dem Schwungrad 7 in ihrer Betriebsweise als Generator angetrieben wird. Dabei nimmt mit der Drehzahl des Schwungrads die Drehzahl der elektrischen Hilfsmaschine 9 kontinuierlich ab.

### 3. Entladen des Schwungrads II

Da mit der elektrischen Hilfsmaschine 9 die Drehzahl der als Generator betriebenen elektrischen Maschine 2 konstant gehalten wird, kommt es zu einer Umkehrung ihrer Drehrichtung und des Leistungsflusses an der Hilfsmaschine 9, wenn die Drehzahl der elektrischen Hilfsmaschine 9 auf null abgesunken ist.

### 4. Entladen des Schwungrads III

So muß die Hilfsmaschine 9 bei weiter abfallender Drehzahl des Schwungrads 7 als Motor betrieben werden. Die hierzu notwendige Energie wird von der als Generator betriebenen elektrischen Maschine 2 abgegriffen. Die elektrische Maschine 2 muß daher sowohl die Leistung der Last als auch die Leistung der elektrischen Hilfsmaschine 9 erzeugen. Dies bedeutet aber keine zusätzliche Leistungsentnahme aus dem Schwungrad 7, weil die Leistung der elektrischen Hilfsmaschine 9 der elektrischen Maschine 2 eingangsseitig wieder zur Verfügung gestellt wird.

### 5. Aufladen des Schwungrads I

Beim Wiederaufladen des Schwungrads 7 mit der als Motor betriebenen elektrischen Maschine 2 wird die Drehrichtung der elektrischen Hilfsmaschine 9 entgegen ihrer vorherigen Drehrichtung beim Betrieb der elektrischen Maschine 2 als Generator kontinuierlich umgekehrt. Dabei wird beim Verzögern der Hilfsmaschine zunächst elektrische Energie erzeugt, die über den Umrichter 18 der Last 13 bzw. der als Motor betriebenen elektrischen Maschine zur Verfügung gestellt wird.

### 6. Aufladen des Schwungrads II

Nachdem die Drehzahl der elektrischen Hilfsmaschine wieder null ist, kommt es zur Leistungs- und Drehrichtungsumkehr der elektrischen Hilfsmaschine.

### 7. Aufladen des Schwungrads III

Die Enddrehzahl des Schwungrads 7 wird dann letztlich erreicht, indem sowohl die elektrische Maschine 2 als auch die elektrische Maschine 9 als Motor betrieben werden. Nach dem Erreichen der Enddrehzahl des Schwungrads 7 sind nur noch Reibungsverluste und dgl. Verlustleistungen mit den beiden elektrischen Maschinen 2 und 9 aufzubringen.

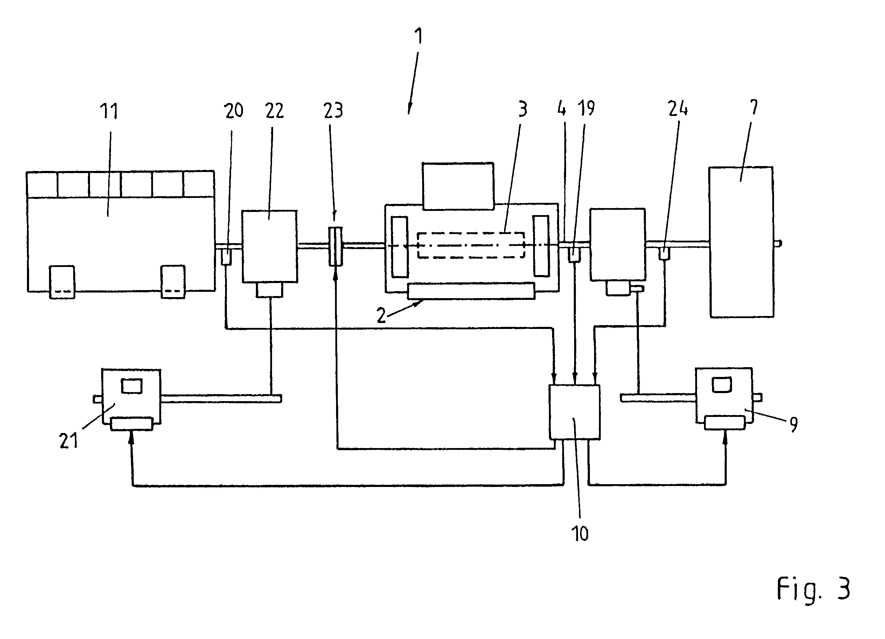

Die Ausführungsform der USV-Anlage 1 gemäß Figur 3 unterscheidet sich von derjenigen gemäß Figur 1 in zwei Punkten. Zunächst ist die Steuereinrichtung 10 aufwendiger gestaltet und greift über einen weiteren Sensor 19 auch die Drehzahl der Eingangs-/Ausgangswelle 4 ab. Ein weiterer Sensor 20 ist an der Ausgangswelle der Brennkraftmaschine 11 vorgesehen und versorgt die Steuereinrichtung 10 mit der Drehzahl der Brennkraftmaschine. Dies nutzt die Steuereinrichtung 10 um zum anderen mit einer weiteren elektrischen Hilfsmaschine 21 das Übersetzungsverhältnis eines weiteren, hier ebenfalls als Planetengetriebe ausgebildeten Differenzgetriebes 22 einzustellen. Das weitere Differenzgetriebe 22 ist zwischen einer schaltbaren Kupplung 23 und der Brennkraftmaschine 11 vorgesehen. Auf der anderen Seite der schaltbaren Kupplung 23, die von der Steuereinrichtung 10 betätigt wird, findet sich der Rotor 3 der elektrischen Maschine 2. Mit dem Differenzgetriebe 22 können Drehzahlunterschiede zwischen der Brennkraftmaschine 11 und dem Rotor 3 der elektrischen Maschine 2 ausgeglichen werden. Sehr großen Drehzahlunterschieden, wie sie beispielsweise beim Stillstand der Brennkraftmaschine 11 auftreten, wird durch auskuppeln der Kupplung 23 begegnet. Die Kupplung 23 könnte zu diesem Zweck auch als Freilaufkupplung ausgebildet werden. Es ist selbst denkbar, auf die Kupplung 23 ganz zu verzichten. Dann muß aber beim Stillstand der Brennkraftmaschine 11 die weitere elektrische Hilfsmaschine 21 eine relativ hohe Drehzahl erreichen, und das Differenzgetriebe 22 wird ständig beansprucht und führt zur Reibungsverlusten. Unter verwendung des Planetengetriebes 22 und der elektrischen Hilfsmaschine 21 kann auch ein separater Anlassermotor für die Brennkraftmaschine 11 entfallen, wobei dies gewisse Anforderungen an die Steuereinrichtung 10 stellt, um dabei einen Gleichlauf des Rotors 3 der elektrischen Maschine 2 mit konstanter Drehzahl zu gewährleisten. Eine Freilaufkupplung 12 kann dann nicht verwendet werden.

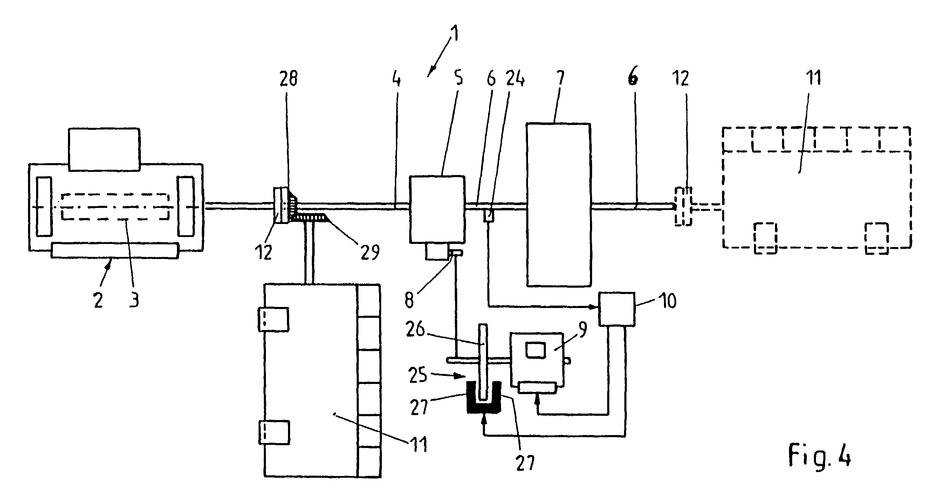

Die Ausführungsform der USV-Anlage 1 gemäß Figur 4 weicht gegenüber derjenigen gemäß Figur 3 in anderen Punkten von der Ausführungsform gemäß Figur 1 ab. Gemäß Figur 4 ist die Hilfsmaschine 9 als elektrische Asynchronmaschine ausgebildet, die beim Netzbetrieb der elektrischen Maschine 2 als Motor durch einfaches Anhängen an das Stromnetz ebenfalls als Motor betrieben wird. Beim Betrieb der elektrischen Maschine 2 als Generator wird die Hilfsmaschine 9 der Ausführungsform gemäß Figur 4 einfach abgeschaltet. Die Regelung der dritten Eingangs-/Ausgangswelle 8 des Differenzgetriebes 5 erfolgt dann durch eine separate mechanische Bremse 25, die hier eine auf der Welle der Hilfsmaschine 9 angeordnete Bremsscheibe 26 und diese beaufschlagende Bremsbacken 27 aufweist. Die Bremskraft der Bremse 25 wird von der Steuerung 10 so geregelt, daß die Drehzahl der Eingangs-/Ausgangswelle 4 konstant gehalten wird, bis die Eingangs-/Ausgangswelle 8 auf null abgebremst ist. Wenn auch noch anschließend, d. h. bei weiter abfallender Drehzahl, kinetische Energie aus dem Schwungrad 7 zurückgewonnen werden soll, kann die Hilfsmaschine 9 mit gegenüber dem Netzbetrieb umgekehrter Polung an die als Generator betriebene elektrische Maschine 2 angehängt werden, um die Eingangs-/Ausgangswelle 8 diesmal in umgekehrter Drehrichtung anzutreiben. Die genaue Regelung der Drehzahl der Hilfsmaschine 9 zur Konstanthaltung der Drehzahl der elektrischen Maschine 2 erfolgt auch dabei mit der mechanischen Bremse 25. Im Gegensatz zu den Ausführungsformen gemäß den Figuren 1 und 3 wird bei der Ausführungsform gemäß der Figur 4 bewußt kinetische Energie mit der mechanischen Bremse 25 vernichtet, d. h. in Wärme umgewandelt. Dafür ist aber auch keine Leistungselektronik für die Rückspeisung von mit der Hilfsmaschine 9 erzeugtem Strom erforderlich. Darüberhinaus entfällt durch die Verwendung einer Asynchronmaschine für die Hilfsmaschine 9 die Notwendigkeit eines Umrichters für deren Betrieb als Motor. Die Ausführungsform der USV-Anlage 1 gemäß Figur 4 zeichnet sich damit insgesamt durch einen besonders geringen Aufwand für die Steuereinrichtung 10 aus. Weiterhin geht die Ausführungsform von einer elektrischen Maschine 2 üblicher und damit kostengünstiger Bauart, daß heißt ohne durchgehende Eingangs-/Ausgangswelle 4, aus. Die Brennkraftmaschine 11 ist dabei über die Freilaufkupplung 12 unter Zwischenschaltung der Zahnräder 28 und 29 als Beispiel für ein einfaches mechanisches Verzweigungsgetriebe an die Eingangs-/Ausgangswelle 4 ankoppelbar. Durch das Zahnverhältnis der Zahnräder 28 und 29 bzw. das Übersetzungsverhältnis des verzweigungsgetriebes können unterschiedliche Nenndrehzahlen der Brennkraftmaschine 11 und der elektrischen Maschine 2 berücksichtigt werden. In Figur 4 ist überdies eine weitere alternative Anordnungsmöglichkeit für die Brennkraftmaschine 11 bei Verwendung einer elektrischen Maschine 2 in Standardausführung in gestrichelter Linienführung dargestellt. Beim Ankoppeln der Brennkraftmaschine 11 an die Eingangs-/Ausgangswelle 6 ergibt sich jedoch der Nachteil, daß die Brennkraftmaschine nur über das träge Schwungrad 7 auf die elektrische Maschine 2 einwirkt, wenn sie diese als Generator antreiben soll, wodurch das Hochfahren der Brennkraftmaschine 11 in den Drehzahlbereich ihrer Nennleistung verzögert wird.

### BEZUGSZEICHENLISTE

- 1 -: USV-Anlage
- 2 -: elektrische Maschine
- 3 -: Rotor
- 4 -: Eingangs-/Ausgangswelle
- 5 -: Differenzgetriebe
- 6 -: Eingangs-/Ausgangswelle
- 7 -: Schwungrad
- 8 -: Eingangs-/Ausgangswelle
- 9 -: elektrische Hilfsmaschine
- 10 -: Steuereinrichtung

- 11 -: Brennkraftmaschine
- 12 -: Freilaufkupplung
- 13 -: Last
- 14 -: externe Stromquelle
- 15 -: Schalter
- 16 -: Thyristorschalter
- 17 -: Drossel
- 18 -: Umrichter
- 19 -: Sensor
- 20 -: Sensor

- 21 -: elektrische Hilfsmaschine
- 22 -: Differenzgetriebe
- 23 -: schaltbare Kupplung
- 24 -: Sensor
- 25 -: mechanische Bremse
- 26 -: Bremsscheibe
- 27 -: Bremsbacke
- 28 -: Zahnrad
- 29 -: Zahnrad

## Patentansprüche

1. Unterbrechungsfreie Stromversorgung mit einer einen Rotor aufweisenden, als Motor oder als Generator betreibbaren elektrischen Maschine, die ohne Zwischenschaltung eines eine variable Eingangsfrequenz aufweisenden Umrichters mit einer mit Wechselstrom zu versorgenden Last verbunden ist, mit einem Schwungrad, das über eine variable Übersetzung aufweisende Kopplungsmittel an den Rotor angekoppelt ist, und mit Steuermitteln für die Übersetzung der Kopplungsmittel, die die Drehzahl der mit der in dem Schwungrad gespeicherten kinetischen Energie als Generator betriebenen elektrischen Maschine zumindest über einen Drehzahtbereich des Schwungrads konstant halten, wobei die Kopplungsmittel ein Differenzgetriebe (5) mit drei Eingangs-/Ausgangswellen (4, 6 und 8) aufweisen und die Steuermittel eine als Motor betreibbare elektrische Hilfsmaschine (9) und eine regelbare Bremse aufweisen, die an der dritten Eingangs-/Ausgangswelle (8) des Differenzgetriebes (5) angreifen, **dadurch gekennzeichnet, daß** die Steuermittel so ausgebildet sind, daß beim Betreiben der elektrischen Maschine (2) als Motor zum Erreichen einer gewünschten Enddrehzahl des Schwungrads (7) die Hilfsmaschine (9) ebenfalls als Motor betrieben wird.

2. Vorrichtung nach Anspruch 1, **dadurch gekennzeichnet, daß** das Planetengetriebe ein Sonnenrad, einen Planetenräder tragenden Läufer und einen Zahnkranz aufweist, wobei das Sonnenrad mit der zu dem Schwungrad (7) führenden Eingangs-/Ausgangswelle (6) und der Läufer mit der zu der elektrischen Maschine (2) führenden Eingangs-/Ausgangswelle (4) drehfest verbunden und wobei der Zahnkranz mit der zu der Hilfsmaschine (9) führenden Eingangs-/Ausgangswelle (8) festgetrieblich gekoppelt ist.

3. Vorrichtung nach Anspruch 1 oder 2, **dadurch gekennzeichnet, daß** die elektrische Hilfsmaschine (9) auch als die Bremse betreibbar ist.

4. Vorrichtung nach einem der Ansprüche 1 bis 3, **dadurch gekennzeichnet, daß** die elektrische Hilfsmaschine (9) eine Asynchronmaschine ist.

5. Vorrichtung nach einem der Ansprüche 1 bis 3, **dadurch gekennzeichnet, daß** die elektrische Hilfsmaschine eine Synchronmaschine ist, die über einen Umrichter (18) mit der elektrischen Maschine (2) und der Last (13) verbindbar ist.

6. Vorrichtung nach einem der Ansprüche 1 bis 5, **dadurch gekennzeichnet, daß** der Rotor (3) durch eine Brennkraftmaschine (11) antreibbar ist.

7. Vorrichtung nach Anspruch 6, **dadurch gekennzeichnet, daß** zwischen dem Rotor (3) und der Brennkraftmaschine (11) eine von den Steuermitteln schaltbare Kupplung (23) vorgesehen ist.

8. Vorrichtung nach Anspruch 6, **dadurch gekennzeichnet, daß** zwischen dem Rotor (3) und der Brennkraftmaschine (11) eine Freilaufkupplung (12) vorgesehen ist.

9. Vorrichtung nach Anspruch 6, 7 oder 8, **dadurch gekennzeichnet, daß** zwischen dem Rotor (3) und der Brennkraftmaschine (11) ein weiteres Differenzgetriebe (22) vorgesehen ist, dessen dritte Eingangs-/Ausgangswelle an eine weitere elektrische Hilfsmaschine (21) der Steuermittel angekoppelt ist.

10. Vorrichtung nach Anspruch 9 soweit nicht rückbezogen auf Anspruch 8, **dadurch gekennzeichnet, daß** die Brennkraftmaschine (11) keinen separaten Anlassermotor aufweist.

## Claims

1. A device for uninterruptedly supplying power, comprising an electrical machine including a rotor and being operable as a motor or as a generator, the electrical machine being connected to a load to be supplied with alternating current without a d.c.-a.c. converter being arranged in between, a flywheel being coupled to the rotor by coupling means having a variable ratio of transmission, and control means for the transmission of the coupling means, the control means at least in a certain range of the number of rotations of the flywheel keeping constant the number of rotations of the electrical machine being operated as a generator by the kinetic energy being stored in the flywheel, the coupling means including a differential transmission (5) having three input/output shafts (4, 6 and 8), and the control means including an electrical auxiliary machine (9) being operable as a motor and a controllable brake, the electrical auxiliary machine (9) and the controllable brake engaging the third input/output shaft (8) of the differential transmission (5), **characterized in that** the control means are designed in such a way that the auxiliary machine (9) is also operated as a motor to reach the desired final number of rotations of the flywheel (7), when the electrical machine (2) is operated as a motor.

2. The device of claim 1, **characterized in that** the differential transmission (5) is a planetary transmission including a sun wheel, a cage rotor carrying planetary wheels and a gear rim, the sun wheel being fixedly connected to the input/output shaft (6) leading to the flywheel (7) and the cage rotor being fixedly connected to the input/output shaft (4) leading to the electrical machine (2), and the gear rim being coupled to the input/output shaft (8) leading to the auxiliary machine (9) at a fixed ratio of transmission.

3. The device of claim 1 or 2, **characterized in that** the electrical auxiliary machine (9) is also operable as the brake.

4. The device of one of claims 1 to 3, **characterized in that** the electrical auxiliary machine (9) is an asynchronous machine.

5. The device of one of claims 1 to 3, **characterized in that** the electrical auxiliary machine (9) is a synchronous machine being connectable to the electrical machine (2) and to the load (13) via a converter (18).

6. The device of one of claims 1 to 5, **characterized in that** the rotor (3) is drivable by a combustion engine (11).

7. The device of claim 6, **characterized in that** a clutch (23) is provided between the rotor (3) and the combustion engine (11), the clutch (23) being switchable by the control means.

8. The device of claim 6, **characterized in that** an overrunning clutch (23) is provided between the rotor (3) and the combustion engine (11).

9. The device of claim 6, 7 or 8, **characterized in that** another differential transmission (22) is provided between the rotor (3) and the combustion engine (11), the third input/output shaft of the differential transmission (22) being coupled to another electrical auxiliary machine (21) of the control means.

10. The device of claim 9 as far as not dependent of 8, **characterized in that** the combustion engine (11) does not include a separate starter motor.

## Revendications

1. Dispositif d'alimentation de sauvegarde secteur comportant une machine électrique comprenant un rotor et qui peut fonctionner comme moteur ou comme générateur, qui est reliée à une charge à alimenter en courant alternatif, sans interposition d'un changeur de fréquence à fréquence d'entrée variable, un volant qui est couplé au rotor par des moyens de couplage présentant un rapport de transmission variable, et des moyens de commande pour la transmission des moyens de couplage qui maintiennent constante la vitesse de rotation de la machine électrique, fonctionnant comme générateur avec l'énergie cinétique accumulée dans le volant, au moins sur une plage de vitesses de rotation du volant, les moyens de couplage comportant un engrenage différentiel (5) comportant trois arbres d'entrée/arbres de sortie (4, 6, 8), et les moyens de commande comportant une machine auxiliaire électrique (9) fonctionnant comme moteur ainsi qu'un frein à régulation, qui agissent sur le troisième arbre d'entrée/de sortie (8) de l'engrenage différentiel (5), **caractérisé en ce que** les moyens de commande sont conçus de manière que pendant le fonctionnement de la machine électrique (2) en tant que moteur, la machine auxiliaire (9) fonctionne également comme moteur pour obtenir une vitesse de rotation finale souhaitée du volant (7).

2. Dispositif selon la revendication 1, **caractérisé en ce que** l'engrenage différentiel (5) est un engrenage planétaire comportant une roue solaire, un rotor portant des roues satellites, ainsi qu'une couronne dentée, la roue solaire étant reliée solidairement en rotation à l'arbre d'entrée/sortie (6) menant au volant (7) et le rotor est relié solidairement en rotation à l'arbre d'entrée/sortie (4) menant à la machine électrique (2), et la couronne dentée étant couplée en transmission de manière fixe à l'arbre d'entrée/sortie (8) menant à la machine auxiliaire (9).

3. Dispositif selon la revendication 1 ou 2, **caractérisé en ce que** la machine auxiliaire électrique (9) peut fonctionner aussi comme frein.

4. Dispositif selon l'une des revendications 1 à 3, **caractérisé en ce que** la machine auxiliaire électrique (9) est une machine asynchrone.

5. Dispositif selon l'une des revendications 1 à 3, **caractérisé en ce que** la machine auxiliaire électrique est une machine synchrone qui peut être reliée, par un mutateur (18), à la machine électrique (2) et à la charge (13).

6. Dispositif selon l'une des revendications 1 à 5, **caractérisé en ce que** le rotor (3) peut être entraîné par un moteur à combustion interne (11).

7. Dispositif selon la revendication 6, **caractérisé en ce qu'**un couplage (23) pouvant être commandé par les moyens de commande est prévu entre le rotor (3) et le moteur à combustion interne (11).

8. Dispositif selon la revendication 6, **caractérisé en ce qu'**un couplage à roue libre (12) est prévu entre le rotor (3) et le moteur à combustion interne (11).

9. Dispositif selon la revendication 6, 7 ou 8, **caractérisé en ce qu'**il est prévu entre le rotor (3) et le moteur à combustion interne (11) un autre engrenage différentiel (22) dont le troisième arbre d'entrée/ sortie est couplé à une autre machine auxiliaire électrique (21) des moyens de commande.

10. Dispositif selon la revendication 9 sauf référence à la revendication 8, **caractérisé en ce que** le moteur à combustion interne (11) ne comporte pas de moteur de démarrage séparé.
